# EUROPEAN PATENT APPLICATION

(11) **EP 1 569 383 A1**
(43) Date of publication of application: **31.08.2005**
(21) Application number: 05003998.1
(22) Date of filing: 24.02.2005
(51) Int. Cl.: H04L 12/18

(54) **Method, system and source for implementing multicasting**

(30) Priority: 25.02.2004 FI 20040295
(71) Applicant: TeliaSonera Finland Oyj, 00510 Helsinki (FI)
(72) Inventor: Lehtonen, Rami, 37800 Toijala (FI)

(57) **Abstract**

The invention relates to a method and system to arrange multicasting in a communication system that comprises a first source (S) and receiver (R) connected to the source (S) by the SSM protocol (Source Specific Multicasting). In the method according to the invention, the first source (S) sends a message on the activity of the source to the receiver (R). The invention enables discovering several sources on the SSM channel by using the Source Active message according to the MSDP protocol (Multicasting Source Discovery Protocol).

## Description

### FIELD OF THE INVENTION

The present invention relates to communication technology. The object of the invention is a method, system and source for implementing multicasting in an environment of several program sources.

### BACKGROUND OF THE INVENTION

Multicasting is a multipoint connection by means of which it is possible to send a one-way message to a predetermined group of receivers. In IP (Internet Protocol) networks multicasting is congruent with the Internet protocol and message transfer is possible both through the Internet and the mobile communication network. In multicasting, data packets are copied to several receivers so that one transmission stream can have many receivers.

One of the most common multicasting protocols is the Protocol Independent Multicast-Sparse Mode (PIM-SM), which is used all over the Internet to establish a multicasting tree. The MSDP protocol, which has become widely common, is used to transfer information on active sources to form the multicasting tree (MSDP, Multicast Source Discovery Protocol). Another method of implementation to discover the sources in a multicasting tree is to require information on the source from the receiver, like in the SSM protocol (SSM, Source Specific Multicast).

Problems have been noted in the use of the MSDP protocol to discover the program source. MSDP does not scale according to usage. For the protocol, Rendezvouis Points (RP) have been defined through which MSDP signalling is routed. When a new user connects to the system, rendezvous point RP sends messages to all entities of the same level. Rendezvous points RP are scattered all over the Internet, which means that each needs to know all the active sources. Consequently, there is no need for other routers to be aware of anything else than the multicasting data they have transferred. Rendezvous points RP form a bottleneck for the system because they must know the status information of every source connected to the Internet. For this reason, a system built to rely on MSDP is also vulnerable to denial-of-service attacks. As an example of the system's vulnerability, the Ramen worm can be mentioned that hit the network in January, 2001. A machine infected by the worm tried to establish a connection to random networks, to port 80. Some of the networks belonged to the multicasting address space whereby every attempt to establish a connection caused building a status in the routers of the multicasting network. At worst, more than 40 000 MDSP protocol messages per minute were received by the routers.

In the SSM protocol, the receivers define the source they desire as the receiver of multicasting traffic. In SSM, a channel is defined as the combination (S, G) of the source's source address (S) and the group (G). The protocol does not use rendezvous points RP at all. This way, better scaling properties and protection against denial-of-service attacks are obtained. Correspondingly, when SSM is used, a direct support ceases to exist to discover several sources and program sources.

To solve this problem, it has been proposed that certain features of MSDP and SSM be combined. Descriptions of the topic can be found in the IETF (Internet Engineering Task Force) publication drafts "Multi-source communications over SSM networks", draft-hordt-mboned-multisource-ssm-02.txt; and "Source Discovery Protocol in SSM Networks", draft-beck-mboned-ssm-source-discovery-protocol-03.txt. However, the prior art solutions always present new protocols to solve the issue whereby the implementation requires investments in relation to the present systems.

### OBJECT OF THE INVENTION

The object of the invention is to obviate the aforementioned drawbacks or at least substantially alleviate them. In particular, it is the object of the invention to bring forth a new type of method and system where the option to use multiple sources is added to the source-specific SSM protocol.

As regards the characteristic features of the invention, reference is made to the claims.

### BRIEF DESCRIPTION OF THE INVENTION

The present invention relates to a method and system to arrange multicasting in a communication system that comprises a first source and a receiver connected to the source by the source-specific SSM protocol. The system additionally comprises means to discover a second source or more sources, like for example in the MSDP protocol. A multitude of sources may be connected to the same system, of which either some or all may be connected to the system in accordance with the invention.

In the system according to the invention, the first source sends a message to the receiver on the source's activity. The activity information can be sent based on either the status of the first source or another source connected to the system. The message may carry either the active or inactive status of the source. Message traffic is always one-way, to the receiver from the source. In a preferred embodiment, the message indicating activity is a Source Active message according to the Multicast Source Discovery Protocol. The Source Active message can be sent according to the UDP and TCP protocols (UDP, User Datagram Protocol; TCP, Transmission Control Protocol) across the IP network, as compared with the TCP/IP protocol usually employed in the MSDP protocol. Port 639 commonly used in the MSDP protocol can also be used in the solution according to the invention. Consequently, the functionality is as close to the MSDP protocol as possible and the modifications required in the systems can be kept small.

In an embodiment, a second source is connected to the system and a group is formed of the sources. The second source is controlled by the first source based on, for example, number, address, authentication method or authentication information, or a similar feature. The system may contain several sources according to limitations defined separately. The information security properties of the invention can be improved by setting an upper limit for the number of sources to the first source. In the method, it is a further improvement for the status information if the information on the source's status is sent at predetermined intervals whereby the receivers can keep track of the active sources belonging to the logical multicasting group.

In the method according to the invention, the source comprises means to send a message, advantageously a Source Active message, indicating the activity of the source to the receiver. In some embodiments, the system comprises means to transfer said message by the UDP or TCP protocol by advantageously using port 639.

A system according to the embodiment comprises at least two sources. The first source comprises means to form a group out of at least two sources and means to control a source belonging to the group based on, for example, number, address, authentication method or authentication information, or a similar feature. It is possible to set, to the first source, an upper limit for the number of sources belonging to the group. The system may additionally comprise means to send information on the source's activity at predetermined intervals.

The invention further relates to a source in a multicasting environment of the type described above. The source comprises means to send a message indicating the source's activity to the receiver. The message is advantageously a Source Active message according to the Multicast Source Discovery Protocol (MSDP). The source may additionally comprise means to send said message by the User Datagram Protocol (UDP), to port 639, for example. The TCP protocol is also possible. In an embodiment, the source comprises means to form a group out of at least two sources and means to control a source that belongs to the group. The source may comprise means to set an upper limit for the number of sources. Furthermore, the source may comprise means to send information on the source's activity at predetermined intervals.

The present invention discloses a simple method to solve the implementation of several sources in a source-specific multicasting environment. The invention improves the usability of multicasting networks by reducing the number of messages carried by the networks. At the same time it is possible to protect against denial-of-service attacks more effectively than before. The routing of multicasting messages is simpler than before by means of the invention. Further, communication between groups of several sources is scaled better than in prior art solutions.

In addition, the solution presented in the invention does not require substantial development investment in existing systems as the purpose is to use the existing protocols in a new, innovative way.

### LIST OF FIGURES

In the following, the invention will be described in detail with the aid of embodiments, in which
Figure 1 is a description in a diagram form of the prior art MSDP protocol,
Figure 2 shows the connecting of a new source according to the invention by using the SSM channel,
Figure 3a show an example of the message structure; and
Figure 3b shows another example of the message structure.

### DETAILED DESCRIPTION OF THE INVENTION

The invention defines the use of several sources in the source-specific SSM multicasting system (SSM, Source Specific Multicasting) without reducing the SSM's data security or scaling properties. The source is discovered in a manner similar to the prior art MSDP protocol (MSDP, Multicasting Source Discovery Protocol), but not all the features specified for MSDP are needed to implement the invention. The source is discovered with the source's and receiver's means, which means that the multicasting routing does not need any other functionalities than SSM support. PIM-SM without the Register/Register Stop messages is an example of this. The invention also simplifies the controlling of the source, because the original source of the SSM channel also controls the other sources.

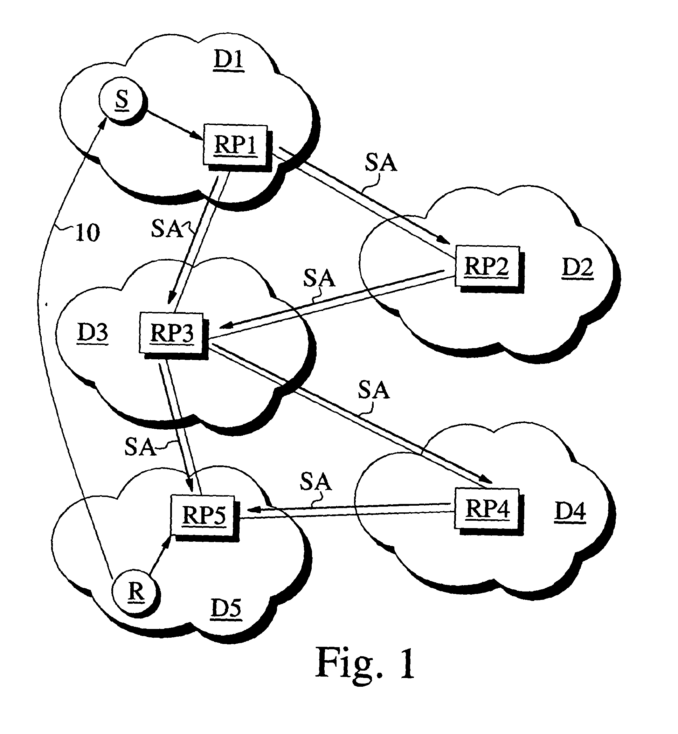

Figure 1 is a simplified depiction of the prior art MSDP protocol method of implementing a multicasting tree. Source S belongs to network domain Dl together with rendezvous point RP1. Source S registers as the source by sending a Source Active message to rendezvous point RP in the same network domain D1. Rendezvous point RP 1 forwards the Source Active message (SA) to other rendezvous points RP2-RP5 at the same level, which also register the source S as the source of the multicasting network. This way, the Source Active message spreads through the Internet via all the rendezvous points RP in several network domains D1-D5.

The actual multicasting 10 is not necessarily routed through rendezvous points RP1-RP5, but normal routing methods can be used. Only MSDP signalling is transferred through rendezvous points RP. In the MSDP protocol, rendezvous points RP are directly connected to source S, if any of receivers R is interested in the source group in question. After this, the transmit network can be optimised for sending multicasting data so that the router closest to receiver R is connected directly to source S using the shortest possible route. However, information on active sources S is still transmitted through rendezvous points RP.

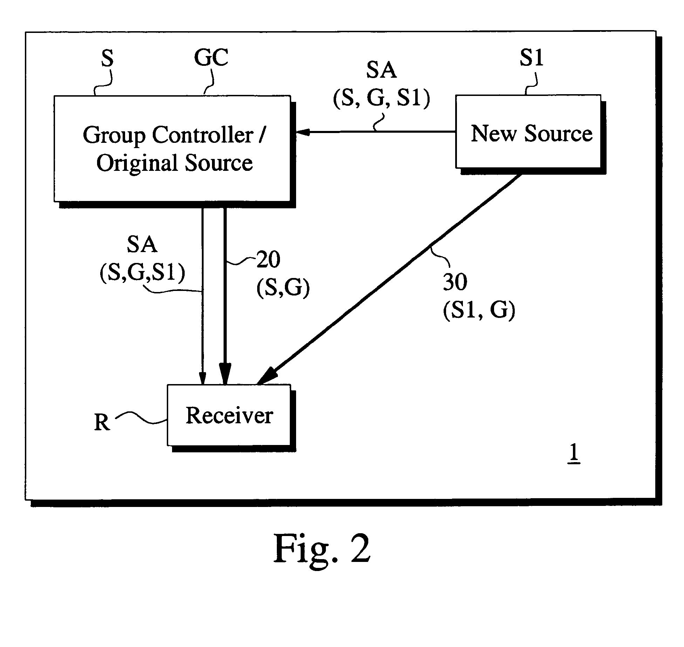

Figure 2 is a simplified diagram of the arrangement according to the invention, in which new source S1 is added to a channel according to the SSM protocol. The original SSM channel is formed of source S and source group G so that receiver R sends a request to join group G and source S. This way, the SSM channel (S, G) is formed before second source S1 is connected to the system. The original SSM channel is used to discover the internal source S of the communication band in logical multicasting group 1.

In the invention, group controller GC is defined as the SSM channel's original source S which acts, in relation to other sources S and receivers R, as a peer entity resembling the MSDP protocol. Group controller GC comprises means that can filter out unwanted messages received from other sources. The group controller may also operate without the source features so that it only takes care of the signalling of the multicasting traffic according to the invention.

Logical multicasting group 1 is defined according to the invention when several sources S, S1 are handled in the source-specific SSM protocol. In logical multicasting group 1, separate SSM channels 20, 30 belong to the common multicasting group. At a minimum, logical multicasting group 1 can be comprised of one SSM channel (S, G) that contains one source S and a group of receivers R.

The multi-source support according to the invention in the SSM protocol requires that, in addition to the SSM support, sources S, S1 and receivers R must support certain MSDP functionalities. Contrary to this, no additional features are required of the routers besides the SSM support. According to the invention, Rendezvous Points RP are not needed in the network, there is no need to include information on rendezvous points RP in the multicasting addresses, and the PIM Register/Register Stop functionalities are not required in the Designated Router (DR).

The discovery of new source S1 in logical multicasting group 1 is based on the formed original SSM channel 20, which is of the form (S, G) and in which S is both the source and group controller GC of multicasting group G. Original SSM channel 20 (S, G) transports the source information together with the normal multicasting traffic originating from source S.

When new source S1 wishes to send to the same logical multicasting group 1, it sends a Source Active (SA) message according to the MSDP protocol to group controller GC. It must be noted that all the group addresses that are not covered by the SSM protocol, must be part of logical multicasting group 1. Message SA is sent to group controller GC's unicast address by the TCP/IP protocol using UDP port 639. This port is the same as used by the MSDP protocol. The MSDP Source Active SA message is comprised of address S of group controller GC, address G of logical multicasting group 1 and address S1 of the new active source. All the active sources must update the MSDP Source Active information via group controller GC at predetermined intervals whereby the existing and new sources are kept up-to-date on the active sources of logical multicasting group 1.

When receiver R receives information on new active source S1, multicasting channel 30 according to the SSM protocol is established between source S1 and receiver R. The new channel 30 is of the form (S1, G). All the traffic in logical multicasting group 1 may consist either of one or more SSM channels or transfer chains. Figure 2 shows, for reasons of simplicity, just one new source S1. However, the system according to the invention may include several new sources. It is furthermore possible to set an upper limit for the number of new sources.

When group controller GC receives the Source Active SA message, it makes a decision based on the predetermined criteria on what procedure or access control is applied in forwarding the message to the original SSM channel (S, G). If it is in accordance with the procedure to forward the information, the group controller sets the destination address of the MSDP Source Active message as the logical group address G. The message is sent by using the UDP/IP protocol. At the same time group controller GC updates its own MSDP cache. If the procedure decision denies the sending of the MSDP Source Active message, the message is discarded. If the MSDP Source Active cache entry expires, group controller GC must delete it from the cache. Group controller GC can also work solely in the control role the way rendezvous point RP does, that is, it does not have to send actual multicasting data.

Receivers R find information on new sources S1 by monitoring MSDP Source Active messages on the original SSM channel 20. Depending on the implementation of the receiver's host computer, receivers R can connect to new source S1 either by sending reports according to the IGMPv3 or MLDv2 (IGMPv3, Internet Group Management Protocol version 3; MLDv2, Multicast Listener Discovery Protocol version 2) to designated router DR. Alternatively, receivers R may forward the decision-making to the application. In such a case, the application interface must be modified to support the decision. Receivers R may also maintain the MSDP Source Active cache, it is seen necessary to remove inactive sources and the associated status information. If the MSDP Source Active status information expires, receiver R must send an IGMP/MLD leave message to delete the status information associated with source S. If receiver R wants to leave logical multicasting group 1 and all the sources S, S1 connected with it, it sends the IGMP/MLD leave message to group address G.

The functionality of the MSDP peer entities in association with the invention deviates from what is presented in the standard in that only part of the normal features are employed in the invention. The following describes the differences in the MSDP implementations.

The messages of the MSDP protocol are usually processed at rendezvous points RP, but in the invention the message processing is implemented at sources S, S1 and receivers R. This reduces the load on the network. Because the MSDP messages are only sent to relevant multicasting groups, scaling problems typical for MSDP do not occur. Below, the term MSDP-lite will be applied to the subset of the MSDP protocol according to the invention.

MSDP-lite uses both UDP and TCP over IP compared to TCP/IP in normal MSDP. In UDP, the port number corresponding to TCP is used. When the operation takes place by UDP from group controller GC to receiver R, MSDP-lite does not employ the MSDP messages Peer Hold Timer, KeepAlive Timer or ConnectRetry Timer. MSDP-lite does not support information encapsulation from the source. As MSDP-lite only operates between designated sources S, S1, group controller GC and receivers R, there is no need for MSDP Peer RPF Forwarding implementations.

MSDP-lite uses the same TLV format (TLV, Type Length Value) in the messages as the normal MSDP. MSDP-lite supports TLV types 8 and 9 which are new TLV types designed for the purpose. The length of the Source Active message can be, for example, 1460 octets, excluding TCP, UDP, IP and layer-2 headers.

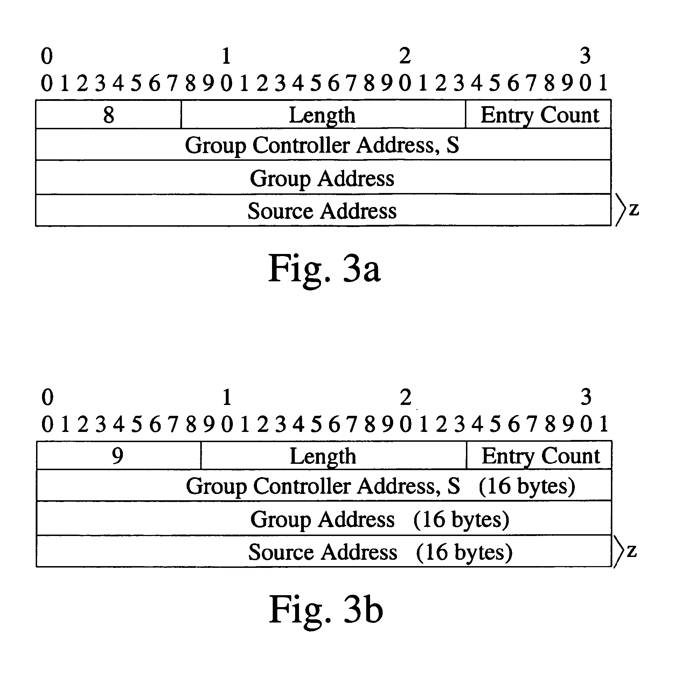

Figure 3a shows an MSDP-lite Source Active TLV message adapted to the Ipv4 protocol. Here, the message is of type 8. In the Length field, the length of the message's control information is presented. The length of the field is 12 octets plus four times the octets in the Entry Count field. The Entry Count field shows the number z of the sources. Thus, several sources can effectively be included in the same logical multicasting group's address. The Group Controller Address field depicts group G's address for the original SSM channel (S, G). In the Source Address field, the IP address of the active source in the logical multicasting group is presented.

Figure 3b shows an MSDP-lite Source Active TLV message adapted to the Ipv6 protocol. Here, the TLV type is 9.

In the solution according to the invention, protective measures are taken against denial-of-service attacks by, for example, limiting and filtering the Source Active messages whereby an upper limit is set in the logical multicasting group for the public sources.

The aforementioned means are implemented with prior art means, for example, by software components, memories or processors and they are not described in closer detail for this reason.

The invention is not limited exclusively to apply to the presented embodiments, but many variations are possible within the scope of the inventive idea of the invention.

## Claims

1. A method to arrange multicasting in a communication system that comprises:
a first source (S);
a receiver (R) connected to the first source (S) by a source-specific protocol (20); and
means to discover a second source (S1), **characterized in that** a message (SA) on the activity of the source is sent to the receiver (R) from the source (S).

2. A method as claimed in claim 1, **characterized in that** said message (SA) is a Source Active message according to the Multicast Source Discovery Protocol (MSDP).

3. A method as claimed in claim 1, **characterized in that** said message (SA) is sent by the User Datagram Protocol (UDP).

4. A method as claimed in claim 3, **characterized in that** said message is sent to port 639 according to the User Datagram Protocol (UDP).

5. A method as claimed in claim 1, **characterized in that** said message (SA) is sent by the Transmission Control Protocol (TCP).

6. A method as claimed in claim 1, **characterized in that**
a second source (S1) is connected to the system;
a group (1) is formed of the sources; and
the second source (S1) is controlled by the first source (S).

7. A method as claimed in claim 6, **characterized in that** an upper limit is set to the first source (S) for the number of sources.

8. A method as claimed in claim 1, **characterized in that** information on the source's activity (SA) is sent at predetermined intervals.

9. A multicasting system that comprises:
a first source (S);
a receiver (R) connected to the first source (S) by a source-specific protocol (20); and
means to discover a second source (S1), **characterized in that** the first source (S) comprises means to send a message (SA) on the activity of the source to the receiver (R) from the source (S).

10. A system as claimed in claim 9, **characterized in that** said message (SA) is a Source Active message according to the Multicast Source Discovery Protocol (MSDP).

11. A system as claimed in claim 9, **characterized in that** the system comprises means to send said message (SA) by the User Datagram Protocol (UDP).

12. A system as claimed in claim 11, **characterized in that** the system comprises means to send said message (SA) to port 639 according to the User Datagram Protocol (UDP).

13. A system as claimed in claim 9, **characterized in that** the system comprises means to send said message (SA) by the Transmission Control Protocol (TCP).

14. A system as claimed in claim 9, **characterized in that**
the system is comprised of at least two sources (S, S1); and
the first source (S) comprises means to form a group (1) out of at least two sources (S, S1) and means to control the second source (S1).

15. A system as claimed in claim 14, **characterized in that** an upper limit is set to the first source (S) for the number of sources (S1).

16. A system as claimed in claim 9, **characterized in that** the system comprises means to send information on the activity (SA) of the source (S, S1) at predetermined intervals.

17. A source (S) in a multicasting system that comprises:
a receiver (R) connected to the source (S) by a source-specific protocol (20); and
means to discover a second source (S1),
**characterized in that** the source (S) comprises means to send a message (SA) on the activity of the source to the receiver.

18. A source as claimed in claim 17, **characterized in that** said message (SA) is a Source Active message according to the Multicast Source Discovery Protocol (MSDP).

19. A source as claimed in claim 17 **characterized in that** the source (S) comprises means to send said message (SA) by the User Datagram Protocol (UDP).

20. A source as claimed in claim 19, **characterized in that** the source (S) comprises means to send said message (SA) from port 639 according to the User Datagram Protocol (UDP).

21. A source as claimed in claim 17, **characterized in that** the source (S) comprises means to send said message (SA) by the Transmission Control Protocol (TCP).

22. A source as claimed in claim 17, **characterized in that** the source (S) comprises means to form a group out of at least two sources and means to control a source (S1) belonging to the group.

23. A source as claimed in claim 22, **characterized in that** an upper limit is set to the source (S) for the number of sources of the group.

24. A source as claimed in claim 17, **characterized in that** the source comprises means to send information on the activity (SA) of the source (S, S1) at predetermined intervals.
